# EUROPEAN PATENT SPECIFICATION

(11) **EP 1 053 174 B1**
(45) Date of publication and mention of the grant of the patent: **15.05.2002**
(21) Application number: 99903835.9
(22) Date of filing: 04.02.1999
(51) Int. Cl.: B64C 1/00, B64F 5/00

(54) **DUAL FUNCTION STRUCTURES**
DOPPELFUNKTIONS-STRUKTUREN
STRUCTURES A DOUBLE FONCTION

(30) Priority: 06.02.1998 GB 9802440
(43) Date of publication of application: 22.11.2000
(73) Proprietor: BAE SYSTEMS plc, Farnborough, Hampshire GU14 6YU (GB)
(72) Inventor: ASH, Geoffrey James, British Aerospace, Preston, Lancashire PR4 1AX (GB); WHAITES, Colin, British Aerospace, Preston, Lancashire PR4 1AX (GB)
(74) Representative: Eastmond, John
(86) International application number: GB9900370
(87) International publication number: WO9939975

(56) References cited:
- WO-A-97/22516
- DE-A- 4 131 569
- DE-A- 4 218 197
- US-A- 3 640 492
- US-A- 4 736 910

## Description

This invention relates to the field of manufacturing, and more specifically but not exclusively to the field of aircraft manufacture.

Traditional design techniques and trends within the aircraft industry have led designers to produce aircraft with profiles which use double curvature panels to describe their external lines. The use of such complicated external shapes in the design of both military and civil aircraft has resulted in the need for elaborate and therefore expensive tooling used in both the manufacture of detailed parts and final assembly.

Within the military aircraft industry, traditional design drivers have been for operational performance improvements, however, more recently a switch in emphasis has been towards providing an effective balance between performance improvement and life cycle cost reductions. This new direction in aircraft design has enabled engineers to study the possibilities of eliminating the familiar double curvature airframes and additionally has provided for research into possible new methods of manufacture and assembly for faceted structures.

Patent application no. WO 97/22516 describes a method of assembling an aircraft from a plurality of modular structural components. This document discloses an aircraft having a common wing component and common propulsion support frame component, such that several variants of the aircraft, each variant having the different structural qualities necessary to perform different roles, could be assembled from a basic number of common components. Other modular structural components, such as flaps, may be specific to a particular variant of aircraft, and may be fixed to the common basic structure during assembly of that variant. This commonality of airframe parts allows a substantial reduction in the cost of designing and manufacturing aircraft variants requiring different structural qualities in order to fulfil their different roles.

It is highly desirable that one aircraft variant is able to perform a variety of different missions. Unlike the previous patent application WO 97/22516, which teaches a commonality of structural parts and concentrates on the airframe structure, US Patent 3,640,492 teaches one aircraft structure which is adapted to house a variety of various mission systems in mission-specific modules. These modules are interchangeable between the same type of aircraft and can be quickly replaced in the event of damage or rapidly changed if the aircraft needs to be reconfigured for a different mission. Each module contains a different avionics mission system which is electrically connected to the main control system of the aircraft when the module is mechanically installed. By simply removing one set of avionics modules and installing a new set, the aircraft can be configured for different roles to fulfil different missions.

US Patent 4,736,910 utilises the same concept as in US Patent 3,640,492, in that avionics mission-specific modules are provided for one type of aircraft structure. However, in this patent, to save time in reconfiguring the aircraft for different missions, the different avionics systems required for the different missions are housed in the nose or the fin of the aircraft. For example, one nose may contain all the avionics systems necessary to enable the aircraft to carry out an attack mission, and another nose may contain all the avionics systems necessary for a reconnaissance mission. After completing one mission, the nose is simply removed and replaced by another nose containing avionics systems specific to the new role of the aircraft.

Providing modular mission systems for rapid role changing for different missions is useful, however, one of the prime cost driving elements associated with the final assembly of modern combat aircraft is that relating to the installation of aircraft systems. Whilst mission systems consist primarily of avionics systems, such as laser rangers for weapon delivery, which are designed to carry out specific missions, the aircraft systems are integral to the aircraft and are usually necessary for the general functioning of the aircraft, whatever the mission. The integration and final assembly of aircraft systems such as environmental control systems (ECS), engine systems, fuel systems, life support systems and avionics is arguably the most time consuming and expensive area of final assembly, as well as proving time consuming and expensive in subsequent repair and maintenance, therefore much research has been conducted into the possible reduction in complexity of such systems in combination with the introduction of faceted fuselage outer profiles.

The required reduction in complexity related to systems which are required to be integrated into structures such as airframes can be achieved by the use of computer aided design techniques which allow the visualisation of elements such as pipe runs and routing and the placement of electrical wiring looms. Whilst usually reducing the length of such piping and wiring, this common approach does not address the complexity inherent in vehicles where essential elements of such systems are distributed around its internal envelope. If real complexity is to be reduced then a method of localising constituent elements of a system needs to be developed along with the integration of both structures and systems where possible.

Our invention provides a method of manufacture for aircraft which substantially reduces the need for high manpower requirements on aircraft final assembly and subsequent maintenanace and repair, by the simplification of the process by the integration of systems equipments with structural elements to produce dual function structures.

Accordingly there is provided a method of manufacture and assembly for aircraft comprising the manufacture of a range of dual function structural modules, said dual function structural modules each comprising specific aircraft systems equipments integrated with structural elements, thereby providing a range of aircraft systems specific structural modules which can be integrated with an aircraft structure, wherein galleries are machined into the structural elements of said modules for routing fluids for use within said system.

This method of manufacture and assembly preferably permits the substantial localisation of constituent elements of a system, and reduces the need for conventional pipework.

Advantageously each of said dual function structural modules comprise substantially all the essential elements of a specific system.

The aircraft system may be an environmental control system. Alternatively the aircraft system may be an engine system or alternatively a power system. The aircraft system may alternatively be a fuel system, or a life support system, or a hydraulics system.

Preferably each of said dual function structural modules has a common modular function such that said modules may be advantageously adapted to be used on a range of different types and variants of said aircraft.

In another aspect of the invention, each of said dual function structural modules could be made load bearing, thereby further reducing the complexity associated with the assembly of such modules into an aircraft structure.

Preferably such dual function structural modules may be realisably connectable with an aircraft structure.

Advantageously said dual function structural modules are adapted to be electronically connected to the main control system of the aircraft when said modules are physically connected to said aircraft structure.

The dual function structural modules advantageously are adapted to be disconnected from an aircraft and replaced in situ.

The dual function structural modules preferably comprise a faceted fuselage outer profile, said modules being capable of being integrated with the aircraft structure to comprise part of an outer surface of the aircraft.

A specific embodiment of the invention will now be described by way of example only with reference to the following drawings:-
Fig 1 shows an exploded modular breakdown view of an aircraft in accordance with the invention.
Fig 2 shows an example of dual function structural module comprising an environmental control system in accordance with the invention.

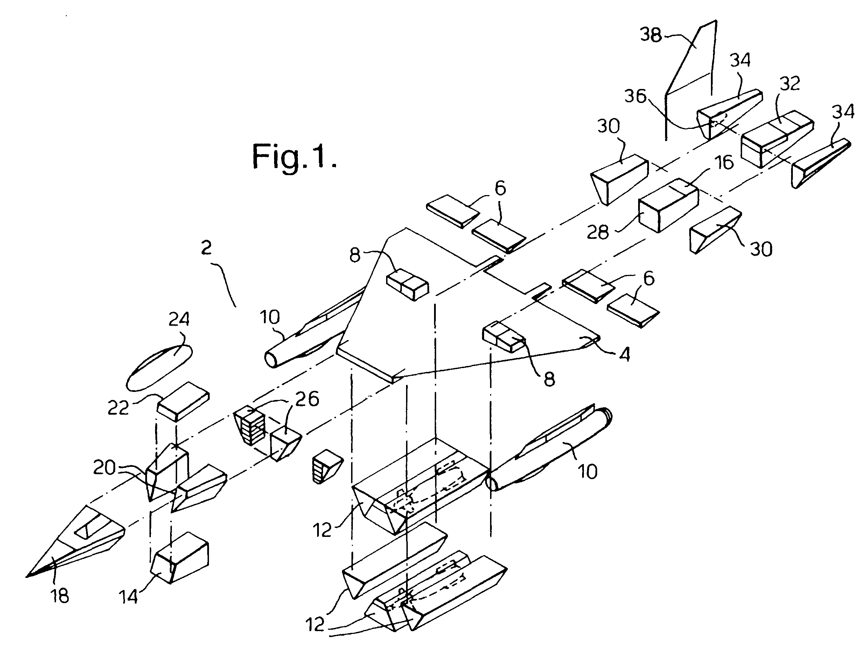

In Fig 1, an aircraft 2 is shown broken down into its constituent modular elements. The modular wing 4, which forms the main structure element of the aircraft, is shown having modular control surfaces 6 and structural interface locations 8 for the mounting of the podded modular engine units 10. Additionally, the weapons modules 12 are designed to be assembled to the underside of the wing module 4 thereby forming the centre section structure of said wing 4. The nose undercarriage unit 14 is designed to be located between the nose cone module 18, and cockpit surround structure 20, the environmental control system module 22 and ultimately the cockpit canopy 24. The avionics systems modules are contained within unit 26 shown forming the interface between the forward end of the structural centre section of the wing 4 and the rear of the cockpit area structure 20.

Aft of the wing module 4 the rear undercarriage module 28 is shown bounded by the hydraulics module 16 and two rear fuselage structural members 30. Aft of the hydraulics module 16 is shown a rear weapons module 32 bounded by two tail section structural members 34 and the tail fin unit 38. Additionally, the starboard tail structural member 34 is shown containing the auxiliary power unit module 36.

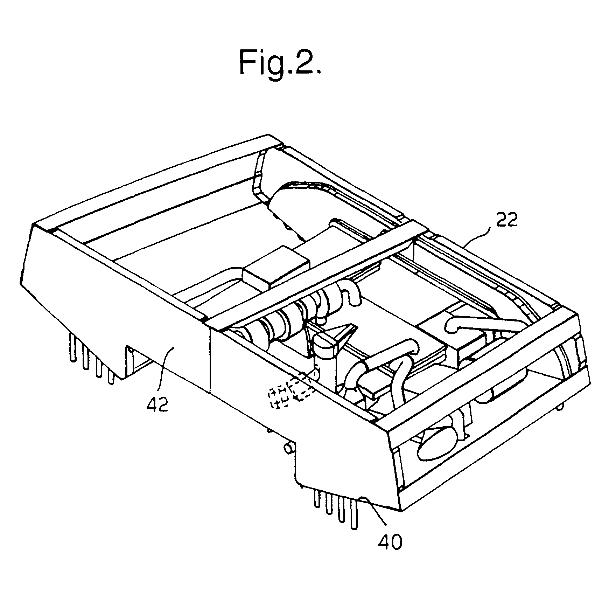

Fig 2 shows a dual function structural module 22 comprising the essential elements of an environmental control system (ECS). The ECS system has been integrated with the surrounding structure such that where possible the optimised structural design allows for the pipework from elements such as the low pressure avionics feed and return to be removed and replaced by use of galleries 40 machined within the end frame of the structure 42. Hence the module performs a dual structural and systems function and can further be made loads bearing such that its assembly into an aircraft structure would require minimum additional structural strengthening.

Using the modular aircraft design approach engineers are able to select common modular functions, such as for example hydraulics module 16 and the environmental control system module 22 such that they can be used on a wide range of aircraft without being limited to the specific detailed design required for the installation of such modules in conventional double curvature fuselages. Additionally engine modules 10 can be designed to accommodate a wide range of engine types, but the interface connections to the wing module 4 will be maintained thereby allowing the rapid assembly and/or disassembly of the engine. The use of fully load bearing dual use modules will further reduce the complexity of assembly.

Applying the principle of interchangeability to modular aircraft design not only reduces the time required for assembly of aircraft but also provides for the repair and maintenance of such aircraft built in accordance with the invention to be greatly simplified. For example should there by an environmental control system failure or problem, by housing all of the essential features of the environmental control in module 16 should it be required, then that individual module can be disconnected from the aircraft and replaced in situ thereby avoiding the problems associated with conventional combat aircraft whereby the removal of major environmental control components would require the disassembly of areas of structure and the removal of individual components.

## Claims

1. A method of manufacture and assembly for aircraft comprising the manufacture of a range of dual function structural modules, said dual function structural modules each comprising specific aircraft systems equipments integrated with structural elements, thereby providing a range of aircraft systems specific structural modules which can be integrated with an aircraft structure, **characterised in that** galleries are machined into the structural elements of said modules for routing fluids for use within said system.

2. A method of manufacture and assembly as claimed in Claim 1 wherein said aircraft system is an environmental control system.

3. A method of manufacture and assembly as claimed in Claim 1 wherein said aircraft system is an engine system.

4. A method of manufacture and assembly as claimed in Claim 1 wherein said aircraft system is a fuel system.

5. A method of manufacture and assembly as claimed in Claim 1 wherein said aircraft system is a life support system.

6. A method of manufacture and assembly as claimed in Claim 1 wherein said aircraft system is a hydraulics system.

7. A method of manufacture and assembly as claimed in Claim 1 wherein said aircraft system is a power system.

8. A method of manufacture and assembly as claimed in any one preceding claim wherein each of said dual function structural modules has a common modular function such that said modules are adaptable to be used on a range of different types and variants of aircraft.

9. A method of manufacture and assembly as claimed in any one preceding claim wherein said dual function structural modules are adapted to be electrically connected to the main control system of the aircraft when said modules are physically connected to said aircraft structure.

10. A method of manufacture and assembly as claimed in any one preceding claim wherein said dual function structural modules comprise a faceted fuselage outer profile, said modules being capable of being integrated with the aircraft structure to comprise part of an outer surface of the aircraft.

## Patentansprüche

1. Verfahren zur Herstellung und zum Zusammenbau von Flugzeugen, wobei eine Reihe von Doppelfunktions-Struktur-Modulen hergestellt wird und die Doppelfunktions-Struktur-Module jeweils spezielle Flugzeugsystem-Ausrüstungen aufweisen, die mit strukturellen Elementen integriert sind, wodurch eine Reihe von spezifischen Flugzeugsystem-Struktur-Modulen gebildet wird, die in einer Flugzeug-Struktur integriert werden können,
**dadurch gekennzeichnet, daß** Kanalstrecken in die strukturellen Elemente der Module eingearbeitet werden, um Fluide zur Benutzung innerhalb des Systems zu leiten.

2. Verfahren zur Herstellung und zum Zusammenbau nach Anspruch 1, bei welchem das Flugzeugsystem ein Umweltschutz-Kontrollsystem ist.

3. Verfahren zur Herstellung und zum Zusammenbau nach Anspruch 1, bei welchem das Flugzeugsystem ein Triebwerkssystem ist.

4. Verfahren zur Herstellung und zum Zusammenbau nach Anspruch 1, bei welchem das Flugzeugsystem ein Brennstoffsystem ist.

5. Verfahren zur Herstellung und zum Zusammenbau nach Anspruch 1, bei welchem das Flugzeugsystem ein Lebenserhaltungssystem ist.

6. Verfahren zur Herstellung und zum Zusammenbau nach Anspruch 1, bei welchem das Flugzeugsystem ein Hydrauliksystem ist.

7. Verfahren zur Herstellung und zum Zusammenbau nach Anspruch 1, bei welchem das Flugzeugsystem ein Leistungssystem ist.

8. Verfahren zur Herstellung und zum Zusammenbau nach einem der vorhergehenden Ansprüche, bei welchem die Doppelfunktions-Struktur-Module eine gemeinsame modulare Funktion derart haben, daß die Module adaptierbar sind, um bei einer Reihe unterschiedlicher Typen und Varianten von Flugzeugen benutzt zu werden.

9. Verfahren zur Herstellung und zum Zusammenbau nach einem der vorhergehenden Ansprüche, bei welchem die Doppelfunktions-Struktur-Module elektrisch an ein Hauptsteuersystem des Flugzeugs angeschlossen werden können, wenn die Module körperlich mit der Flugzeug-Struktur verbunden werden.

10. Verfahren zur Herstellung und zum Zusammenbau nach einem der vorhergehenden Ansprüche, bei welchem die Doppelfunktions-Struktur-Module ein facettiertes äußeres Rumpfprofil aufweisen, wobei die Module in der Lage sind, in die Flugzeug-Struktur integriert zu werden, um einen Teil der äußeren Oberfläche des Flugzeuges zu bilden.

## Revendications

1. Procédé de fabrication et d'assemblage pour un avion comprenant la fabrication d'une gamme de modules structurels à double fonction, lesdits modules structurels à double fonction comprenant chacun des équipements pour systèmes d'avion spécifiques intégrés avec des éléments structurels, fournissant ainsi une gamme de modules structurels spécifiques pour des systèmes d'avion qui peuvent être intégrés dans la structure d'un avion, **caractérisé en ce que** des passages sont usinés dans les éléments structurels desdits modules dans le but d'acheminer des fluides destinés à être utilisés à l'intérieur dudit système.

2. Procédé de fabrication et d'assemblage selon la revendication 1, dans lequel ledit système d'avion est un système de contrôle de l'environnement.

3. Procédé de fabrication et d'assemblage selon la revendication 1, dans lequel ledit système d'avion est un système de moteur.

4. Procédé de fabrication et d'assemblage selon la revendication 1, dans lequel ledit système d'avion est un système pour carburant.

5. Procédé de fabrication et d'assemblage selon la revendication 1, dans lequel ledit système d'avion est un système d'équipement de survie artificelle.

6. Procédé de fabrication et d'assemblage selon la revendication 1, dans lequel ledit système d'avion est un système hydraulique.

7. Procédé de fabrication et d'assemblage selon la revendication 1, dans lequel ledit système d'avion est un système d'énergie.

8. Procédé de fabrication et d'assemblage selon l'une quelconque des revendications précédentes, dans lequel chacun desdits modules structurels à double fonction a une fonction modulaire commune de telle sorte que lesdits modules peuvent être adaptés pour être utilisés sur une gamme de types et de variantes d'avions différents.

9. Procédé de fabrication et d'assemblage selon l'une quelconque des revendications précédentes, dans lequel lesdits modules structurels à double fonction sont adaptés pour être connectés électriquement au système de contrôle principal de l'avion lorsque lesdits modules sont connectés physiquement à ladite structure de l'avion.

10. Procédé de fabrication et d'assemblage selon l'une quelconque des revendications précédentes, dans lequel lesdits modules structurels à double fonction comprennent un profil extérieur de fuselage à facettes, lesdits modules étant capables d'être intégrés à la structure de l'avion pour comprendre la partie d'une surface extérieure de l'avion.
